# EUROPÄISCHE PATENTSCHRIFT

(11) **EP 1 145 940 B1**
(45) Veröffentlichungstag und Bekanntmachung des Hinweises auf die Patenterteilung: **23.03.2005**
(21) Anmeldenummer: 01103281.0
(22) Anmeldetag: 13.02.2001
(51) Int. Cl.: B62D 33/067

(54) **Lagerung eines insbesondere als Fahrerkabine eines Lastkraftwagens ausgebildeten ersten Fahrzeugteils auf einem insbesondere als Fahrzeugrahmen ausgebildeten zweiten Fahrzeugteil**
Bearing between a first vehicle part , especially of a drivers' cabin of a truck , and a second vehicle part , especially a chassis
Support d'une partie première d'un véhicule , en particulier la cabine du conducteur d'un camion sur une deuxième partie , en particulier le chassis

(30) Priorität: 11.04.2000 DE 10017859
(43) Veröffentlichungstag der Anmeldung: 17.10.2001
(73) Patentinhaber: Carl Freudenberg KG, 69469 Weinheim (DE)
(72) Erfinder: Hamaekers, Arno, 69517 Gorxheimertal (DE); Rudolf, Axel, 64342 Seeheim/Jugenheim (DE); Simuttis, Arnold, Dr., 55545 Bad Kreuznach (DE)

(56) Entgegenhaltungen:
- DE-U- 7 344 934
- PATENT ABSTRACTS OF JAPAN vol. 007, no. 244 (M-252), 28. Oktober 1983 (1983-10-28) & JP 58 128972 A (ISUZU JIDOSHA KK), 1. August 1983 (1983-08-01)

## Beschreibung

Die Erfindung betrifft eine Lagerung eines insbesondere als Fahrerkabine eines Lastkraftwagens ausgebildeten ersten Fahrzeugteils auf einem insbesondere als Fahrzeugrahmen ausgebildeten zweiten Fahrzeugteil, wobei das erste Fahrzeugteil aus einer ersten Position relativ zu dem zweiten Fahrzeugteil in eine zweite Position bewegt werden kann und wobei eine Welle vorgesehen ist, um die das erste Fahrzeugteil aus der ersten Position relativ zu dem zweiten Fahrzeugteil in die zweite Position drehbar ist. Diese Lagerung mit den Merkmalen des Oberbegriffs des Anspruchs 1 ist aus JP-A-58 128972 bekannt.

Eine weitere Lagerung einer Fahrerkabine eines Lastkraftwagens auf dem Fahrzeugrahmen ist aus der EP-A-0 768 231 bekannt. Durch die in diesem Dokument beschriebene Lagerung sollen die vom Fahrzeugrahmen auf die Fahrerkabine übertragenen, betriebsbedingten Querschwingungen reduziert werden. Dies soll gemäß der EP-A-0 768 231 dadurch erfolgen, dass das Fahrerhaus in bezug auf die Fahrzeuglängsachse querschwingungsmäßig vom Fahrzeugrahmen entkoppelbar ist. Nachteil dieser Lagerung ist jedoch, dass sie einen relativ komplexen technischen Aufbau erfordert.

### Darstellung der Erfindung

Der Erfindung liegt die Aufgabe zugrunde, eine Lagerung der eingangs genannten Art derart weiterzuentwickeln, dass die Lagerung einfach und kostengünstig hergestellt werden kann.

Diese Aufgabe wird erfindungsgemäß bei einer Lagerung der eingangs genannten Art dadurch gelöst, dass an der Welle in einem ersten Wellenabschnitt ein erstes nachgiebiges Lagerelement und in einem zweiten Wellenabschnitt ein zweites nachgiebiges Lagerelement vorgesehen ist, dass das erste Fahrzeugteil an der Welle in dem ersten Wellenabschnitt über ein erstes Stützelement und in dem zweiten Wellenabschnitt über das nachgiebige zweite Lagerelement abgestützt ist und dass die Welle in ihrem ersten Wellenabschnitt über das erste nachgiebige Lagerelement und in ihrem zweiten Wellenabschnitt über ein zweites Stützelement auf dem zweiten Fahrzeugteil abgestützt ist.

Durch diese erfindungsgemäße Lösung wird eine robuste und kostengünstig herstellbare Lagerung angegeben, die insbesondere in dem in Fahrtrichtung vorderen Abschnitt der Fahrerkabine angeordnet werden kann, so dass die Fahrerkabine um die Welle aus ihrer ersten Position, der Fahrposition in die zweite Position angehoben beziehungsweise gekippt werden kann. Die erfindungsgemäße Kombination und Anordnung der Stützelemente und der nachgiebigen Lagerelemente, welche beispielsweise als Gummilager ausgebildet sein können, ermöglicht es, eine Übertragung von Schwingungen auf die Fahrerkabine zu verringern.

Gemäß einer vorteilhaften Ausgestaltung der Erfindung ist eine Drehfeder vorgesehen, die eine zwischen dem ersten und dem zweiten Fahrzeugteil wirkende Drehkraft erzeugt, welche die Bewegung des ersten Fahrzeugteils aus der ersten Position in die zweite Position unterstützt. Die Drehkraft ist derart bemessen, dass die Fahrerkabine aufgrund ihres Gewichts in der unteren, ersten Position gehalten wird. Dabei wird durch die Drehfeder die Kraft reduziert, welche erforderlich ist die Fahrerkabine in die zweite Position zu bewegen.

Eine besonders kostengünstige Konstruktion wird dadurch erzielt, dass die Welle als Drehfeder ausgebildet ist.

Dabei ist die Welle vorteilhafterweise als Torsionsfeder, insbesondere als gerader Torsionsstab ausgebildet.

Die Welle kann dadurch besonders einfach die Funktion einer Drehfeder übernehmen, dass ein erstes Ende der Welle mit dem ersten Stützelement drehfest verbunden ist und dass das zweite Ende der Welle mit dem zweiten Stützelement drehfest verbunden ist.

Dabei erfolgt die drehfeste Verbindung vorteilhafterweise durch Formschluss.

Dieser kann dadurch erreicht werden, dass das erste und/oder zweite Ende der Welle als Keilwelle ausgebildet ist.

Eine weitere Verbesserung kann dadurch erzielt werden, dass an dem ersten und/oder zweiten Ende der Welle eine die Welle relativ zu dem ersten und/oder zweiten Fahrzeugteil verdrehende Stellvorrichtung zur Einstellung der Drehkraft vorgesehen ist.

Gemäß einer besonders vorteilhaften Ausgestaltung der Erfindung ist vorgesehen, dass sich die Welle durch das erste und/oder durch das zweite Lagerelement hindurch erstreckt. Auf diese Weise wird eine besonders kompakte und stabile Konstruktion erreicht.

Weiterhin kann vorgesehen sein, dass das erste und/oder zweite Lagerelement ein Buchsenlager ist, welches ein inneres Verankerungsteil und ein über einen Federkörper mit dem inneren Verankerungsteil verbundenes äußeres Verankerungsteil aufweist und wobei das innere Verankerungsteil auf der Welle und das äußere Verankerungsteil auf dem ersten oder zweiten Fahrzeugteil abgestützt sind. Auf diese Weise kann eine besonders gute Schwingungsisolation der Fahrerkabine erreicht werden.

Von Vorteil wird dabei das erste und/oder zweite Lagerelement über Gleitlager auf der Welle drehbar gelagert.

Eine weitere Verbesserung der Schwingungsisolation der Fahrerkabine kann dadurch erreicht werden, dass das erste und/oder zweite Lagerelement hydraulisch dämpfend sind. Dies kann beispielsweise durch hydraulisch gedämpfte Buchsenlager erfolgen, welche einen mit Dämpfungsflüssigkeit gefüllten Arbeitsraum und einen von diesem getrennten und über einen Durchlass mit dem Arbeitsraum verbundenen Ausgleichsraum aufweisen, wobei das Volumen des Arbeitsraums bei einer Relativbewegung von erstem und zweitem Stützkörper verändert wird, so dass Dämpfungsflüssigkeit in den Durchlass zwischen Ausgleichsraum und Arbeitsraum bewegt wird.

Weiterhin ist vorteilhafterweise vorgesehen, dass das erste und/oder zweite Stützelement starr ausgebildet sind.

Eine besonders stabile und kostengünstig herstellbare Lagerung wird auch dadurch erzielt, dass das erste und/oder zweite Stützelement zwei Schenkel aufweist, über die das Stützelement auf der Welle gelagert ist. Dabei können die Stützelemente beispielsweise aus einem U-Profil aus Stahl besonders kostengünstig hergestellt werden.

### Kurzbeschreibung der Zeichnungen

Der Gegenstand der Erfindung wird nachfolgend anhand der Zeichnungen weiter verdeutlicht. Es zeigen:
- Figur 1: eine Lagerung einer Fahrerkabine eines Lastkraftwagens an einem Fahrzeugrahmen gemäß einer ersten Ausführungsform und
- Figur 2: eine Lagerung einer Fahrerkabine eines Lastkraftwagens an einem Fahrzeugrahmen gemäß einer zweiten Ausführungsform.

### Ausführung der Erfindung

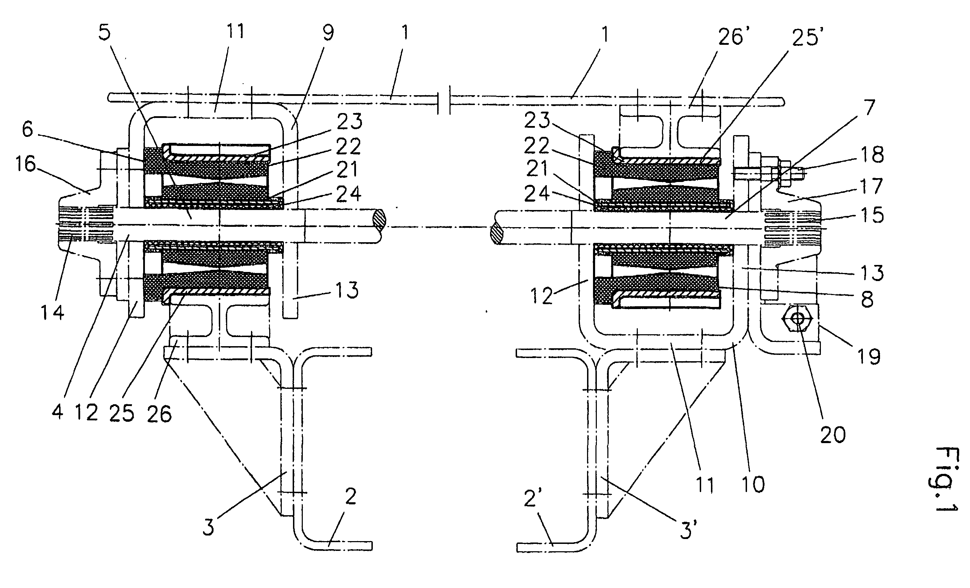

In Figur 1 ist eine vordere Lagerung eines als Fahrerkabine 1 ausgebildeten ersten Fahrzeugteils an einem Fahrzeugrahmen 2, 2' dargestellt. Dabei ist von der Fahrerkabine 1 schematisch nur ein unterer Abschnitt dargestellt. Der Fahrzeugrahmen 2, 2' besteht aus zwei U-förmigen Trägern, welche sich in Richtung der Fahrzeuglängsachse erstrecken, wobei die Schenkel der U-förmigen Träger des Fahrzeugrahmens 2, 2' nach innen gewandt sind. An den Außenseiten des Fahrzeugrahmens 2, 2' sind Halterungen 3, 3' vorgesehen.

Die erfindungsgemäße Lagerung umfasst dabei eine Lagereinheit, welche zwischen den Halterungen 3, 3' und der Fahrerkabine 1 angeordnet ist und ermöglicht es, die Fahrerkabine 1 aus einer ersten Position relativ zu dem Fahrzeugraum 2, 2' in eine zweite Position zu bewegen.

Hierzu weist die Lagerung eine Welle 4 auf, um die die Fahrerkabine 1 aus ihrer ersten Position, beispielsweise aus der abgesenkten Fahrposition relativ zu dem Fahrzeugrahmen 2, 2' in die zweite Position, beispielsweise eine angehobene Serviceposition drehbar ist. An der Welle 4 ist dabei in einem ersten Wellenabschnitt 5 ein erstes nachgiebiges Lagerelement 6 angeordnet. In einem zweiten Wellenabschnitt 7 ist ein zweites nachgiebiges Lagerelement 8 angeordnet. Die Fahrerkabine 1 ist an der Welle 4 in dem ersten Wellenabschnitt 5 über ein erstes Stützelement 9 und in dem zweiten Wellenabschnitt 7 über das nachgiebige zweite Lagerelement 8 abgestützt. Die Welle 4 wiederum ist in ihrem ersten Wellenabschnitt 5 über das erste nachgiebige Lagerelement 6 und in ihrem zweiten Wellenabschnitt 7 über ein zweites Stützelement 10 über die Halterungen 3, 3' an den Fahrzeugrahmen 2, 2' abgestützt.

Das erste und das zweite Stützelement 9, 10 sind starr ausgebildet und weisen ein U-förmiges Profil mit einem mittleren Abschnitt 11 und zwei Schenkeln 12, 13 auf. In den Stützelementen 9, 10 sind im Bereich der Schenkel 12, 13 Bohrungen vorgesehen, durch die sich die Welle 4 erstreckt und mit geringem Spiel an den durch die Bohrungen in den Schenkeln 12, 13 gebildeten Anlageflächen anliegt.

Die Welle 4 ist als eine Drehfeder ausgebildet, die eine zwischen der Fahrerkabine 1 und dem Fahrzeugrahmen 2, 2' wirkende Drehkraft erzeugt. Durch diese Drehkraft wird die Bewegung der Fahrerkabine 1 aus der ersten Position in die zweite Position unterstützt. Die Welle 4 ist dabei derart ausgebildet und angeordnet, dass sie ein gerader Torsionsstab ist. Dabei ist ein erstes Ende 14 der Welle 4 mit dem ersten Stützelement 9 drehfest verbunden. Das zweite Ende 15 der Welle 4 ist mit dem zweiten Stützelement 10 drehfest verbunden. Die drehfeste Verbindung erfolgt dabei über Halteelemente 16 beziehungsweise 17, welche einerseits über Verbindungsmittel 18 mit den Stützelementen 9 beziehungsweise 10 verschraubt sind und andererseits formschlüssig mit der Welle 4 verbunden sind. Hierzu sind das erste Ende 14 und das zweite Ende 15 der Welle 4 als Keilwelle ausgebildet, die mit einer entsprechend geformten Ausnehmung in den Halteelementen 16, 17 formschlüssig in Eingriff steht.

An dem zweiten Ende 15 der Welle 4 ist eine Stellvorrichtung 19 zur Einstellung der durch die Welle 4 erzeugten Drehkraft vorgesehen. Die Stellvorrichtung 19 weist eine Stellschraube 20 auf, durch die die Welle 4 im Bereich des zweiten Endes 15 relativ zu dem Fahrzeugrahmen 2, 2' beziehungsweise dem ersten Ende 14 der Welle 4 gedreht werden kann.

Die Welle 4 erstreckt sich durch das erste und das zweite Lagerelement 6, 8 hindurch. Sowohl das erste als auch das zweite Lagerelement 6, 8 ist ein Buchsenlager, welches ein inneres Verankerungsteil 21 und ein über einen Federkörper 22 mit dem inneren Verankerungsteil 21 verbundenes äußeres Verankerungsteil 23 aufweist. Der Federkörper 22 ist als Gummikörper ausgebildet. Weiterhin sind die inneren Verankerungsteile 21 des ersten und des zweiten Lagerelements 6, 8 über Gleitlager 24 auf der Welle 4 drehbar gelagert. Die Gleitlager 24 umfassen axial und radial wirkende Gleitlagerbuchsen, welche ein widerstandsarmes Verdrehen von Welle 4 und erstem beziehungsweise zweitem Lagerelement 6, 8 ermöglichen.

Das erste Lagerelement 6 weist auf seiner unteren, dem Fahrzeugrahmen 2 beziehungsweise der Halterung 3 zugewandten Seite eine Anlagefläche 25 für ein Zwischenstück 26 auf, über die das erste Lagerelement 6 an dem Fahrzeugrahmen 2 beziehungsweise der Halterung 3 abgestützt ist.

Eine vergleichbare Anlagefläche 25' ist an dem zweiten Lagerelement 8 an dessen oberer, der Fahrerkabine 1 zugewandten Seite ausgebildet. Die Fahrerkabine 1 ist über das an der Anlagefläche 25' anliegende Zwischenstück 26' an dem zweiten Lagerelement 8 elastisch abgestützt.

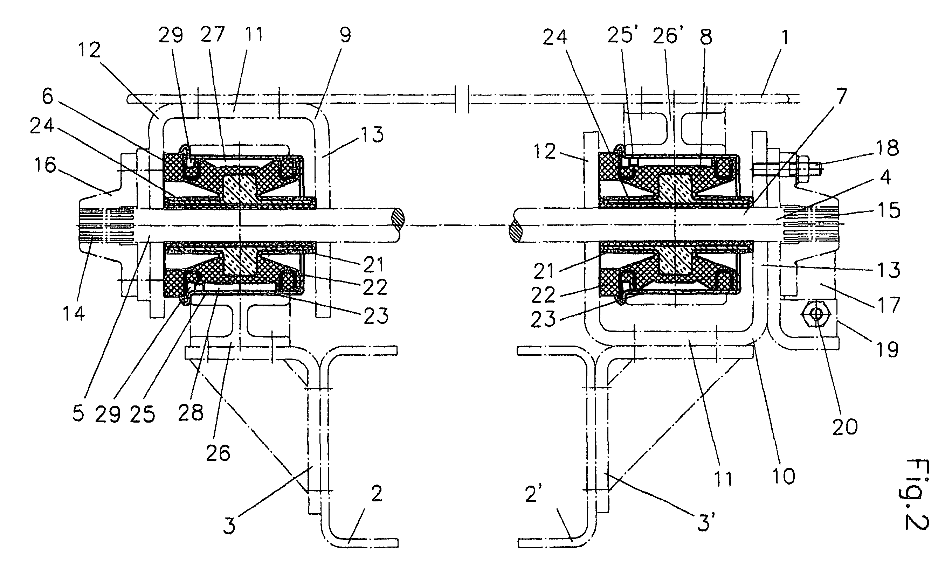

Die in Figur 2 dargestellte weitere Ausführungsform einer erfindungsgemäßen Lagerung entspricht weitgehend der in Figur 1 dargestellten Ausführungsform, weshalb Teile mit gleicher Funktion mit denselben Bezugsziffem versehen sind. Anders als in Figur 1 sind das erste und das zweite Lagerelement 6, 8 hydraulisch dämpfend. Jedes der Lagerelemente 6, 8 weist einen mit Dämpfungsflüssigkeit gefüllten Arbeitsraum 27 und einen von dem Arbeitsraum 27 getrennten Ausgleichsraum 28 auf, welcher über einen Durchlaß 29 mit dem Arbeitsraum 27 verbunden ist. Der Durchlaß 29 erstreckt sich dabei entlang der radial äußeren Kontur des ersten Lagerelements 6 beziehungsweise des zweiten Lagerelements 8.

Weiterhin ist an dem inneren Verankerungsteil 21 ein in radialer Richtung nach außen vorspringender Abschnitt 30 vorgesehen. An diesem ist beidseitig der Federkörper 22 anvulkanisiert. Gleichzeitig wirkt der Vorsprung 30 als Anschlag, der die Relativbewegung zwischen dem inneren Verankerungsteil 21 und dem äußeren Verankerungsteil 23 begrenzt.

## Patentansprüche

1. Lagerung eines insbesondere als Fahrerkabine (1) eines Lastkraftwagens ausgebildeten ersten Fahrzeugteils auf einem insbesondere als Fahrzeugrahmen (2, 2') ausgebildeten zweiten Fahrzeugteils, wobei das erste Fahrzeugteil aus einer ersten Position relativ zu dem zweiten Fahrzeugteil in eine zweite Position bewegt werden kann und wobei eine Welle (4) vorgesehen ist, um die das erste Fahrzeugteil (1) aus der ersten Position relativ zu dem zweiten Fahrzeugteil (2, 2') in die zweite Position drehbar ist, **dadurch gekennzeichnet, dass** an der Welle (4) in einem ersten Wellenabschnitt (5) ein erstes nachgiebiges Lagerelement (6) und in einem zweiten Wellenabschnitt (7) eine zweites nachgiebiges Lagerelement (8) vorgesehen ist, dass das erste Fahrzeugteil (1) an der Welle (4) in dem ersten Wellenabschnitt (5) über ein erstes Stützelement (9) und in dem zweiten Wellenabschnitt (7) über das nachgiebige zweite Lagerelement (8) abgestützt ist und dass die Welle (4) in ihrem ersten Wellenabschnitt (5) über das erste nachgiebige Lagerelement (6) und in ihrem zweiten Wellenabschnitt (7) über ein zweites Stützelement (10) auf dem zweiten Fahrzeugteil (2, 2') abgestützt ist.

2. Lagerung nach Anspruch 1, **dadurch gekennzeichnet, dass** eine Drehfeder vorgesehen ist, die eine zwischen dem ersten und dem zweiten Fahrzeugteil (1, 2, 2') wirkende Drehkraft erzeugt, welche die Bewegung des ersten Fahrzeugteils (1) aus der ersten Position in die zweite Position unterstützt.

3. Lagerung nach Anspruch 2, **dadurch gekennzeichnet, dass** die Welle (4) als die Drehfeder ausgebildet ist.

4. Lagerung nach Anspruch 3, **dadurch gekennzeichnet, dass** die Welle (4) als Torsionsfeder, insbesondere als gerader Torsionsstab ausgebildet ist.

5. Lagerung nach Anspruch 3 oder 4, **dadurch gekennzeichnet, dass** ein erstes Ende (14) der Welle (4) mit dem ersten Stützelement (9) drehfest verbunden ist und dass eine zweites Ende (15) der Welle (4) mit dem zweiten Stützelement (10) drehfest verbunden ist.

6. Lagerung nach Anspruch 5, **dadurch gekennzeichnet, dass** die drehfeste Verbindung durch Formschluss erfolgt.

7. Lagerung nach Anspruch 6, **dadurch gekennzeichnet, dass** das erste und/oder zweite Ende (14, 15) der Welle (4) als Keilwelle ausgebildet ist.

8. Lagerung nach einem der Ansprüche 5 bis 7, **dadurch gekennzeichnet, dass** an dem ersten und/oder zweiten Ende (14, 15) der Welle (4) eine die Welle (4) relativ zu dem ersten und/oder zweiten Fahrzeugteil (1, 2, 2') verdrehende Stellvorrichtung (19) zur Einstellung der Drehkraft vorgesehen ist.

9. Lagerung nach einem der Ansprüche 1 bis 8, **dadurch gekennzeichnet, dass** die Welle sich durch das erste und/oder das zweite Lagerelement (6,8) hindurch erstreckt.

10. Lagerung nach einem der Ansprüche 1 bis 9, **dadurch gekennzeichnet, dass** das erste und/oder zweite Lagerelement (6, 8) ein Buchsenlager ist, welches ein inneres Verankerungsteil (21) und ein über einen Federkörper (22) mit dem inneren Verankerungsteil (21) verbundenes äußeres Verankerungsteil (23) aufweist und wobei das innere Verankerungsteil (21) auf der Welle (4) und das äußere Verankerungsteil (23) auf dem ersten beziehungsweise zweiten Fahrzeugteil (1, 2, 2') abgestützt sind.

11. Lagerung nach einem der Ansprüche 1 bis 10, **dadurch gekennzeichnet, dass** das erste und/oder zweite Lagerelement (6, 8) über ein Gleitlager (24) auf der Welle (4) drehbar gelagert sind.

12. Lagerung nach einem der Ansprüche 1 bis 11, **dadurch gekennzeichnet, dass** das erste und/oder zweite Lagerelement (6, 8) hydraulisch dämpfend sind.

13. Lagerung nach einem der Ansprüche 1 bis 12, **dadurch gekennzeichnet, daß** das erste und/oder zweite Stützelement (9, 10) starr ausgebildet sind.

14. Lagerung nach einem der Ansprüche 1 bis 13, **dadurch gekennzeichnet, dass** das erste und/oder zweite Stützelement (9, 10) zwei Schenkel (12, 13) aufweisen, über die das Stützelement (9, 10) auf der Welle (4) gelagert ist.

## Claims

1. A bearing arrangement of a first vehicle part, designed in particular as a driver's cab (1) of a truck, on a second vehicle part, designed in particular as a vehicle frame (2, 2'), the first vehicle part being movable out of a first position relative to the second vehicle part into a second position, and a shaft (4) being provided, about which the first vehicle part (1) can be rotated out of the first position relative to the second vehicle part (2, 2') into the second position, **characterized in that**, on the shaft (4), a first flexible bearing element (6) is provided in a first shaft portion (5) and a second flexible bearing element (8) is provided in a second shaft portion (7), **in that** the first vehicle part (1) is supported on the shaft (4) in the first shaft portion (5) via a first support element (9) and in the second shaft portion (7) via the flexible second bearing element (8), and **in that** the shaft (4) is supported on the second vehicle part (2, 2') in its first shaft portion (5) via the first flexible bearing element (6) and in its second shaft portion (7) via a second support element (10).

2. A bearing arrangement according to claim 1, **characterized in that** a torque spring is provided, which generates a torque which acts between the first and the second vehicle parts (1, 2, 2') and supports the movement of the first vehicle part (1) out of the first position into the second position.

3. A bearing arrangement according to claim 2, **characterized in that** the shaft (4) is designed as the torque spring.

4. A bearing arrangement according to claim 3, **characterized in that** the shaft (4) is designed as a torsion spring, in particular as a straight torsion bar.

5. A bearing arrangement according to claim 3 or 4, **characterized in that** a first end (14) of the shaft (4) is connected in a rotationally fixed manner to the first support element (9) and **in that** a second end (15) of the shaft (4) is connected in a rotationally fixed manner to the second support element (10).

6. A bearing arrangement according to claim 5, **characterized in that** the rotationally fixed connection is effected by positive locking.

7. A bearing arrangement according to claim 6, **characterized in that** the first and/or second end (14, 15) of the shaft (4) is designed as a splined shaft.

8. A bearing arrangement according to any one of claims 5 to 7, **characterized in that** an adjusting device (19) for adjusting the torque is provided at the first and/or second end (14, 15) of the shaft (4), which device twists the shaft (4) relative to the first and/or second vehicle part (1, 2, 2').

9. A bearing arrangement according to any one of claims 1 to 8, **characterized in that** the shaft extends through the first and/or the second bearing element (6, 8).

10. A bearing arrangement according to any one of claims 1 to 9, **characterized in that** the first and/or second bearing element (6, 8) is a sleeve bearing, which has an inner anchoring part (21) and an outer anchoring part (23) connected to the inner anchoring part (21) via a spring body (22), the inner anchoring part (21) being supported on the shaft (4) and the outer anchoring part (23) being supported on the first or second vehicle part (1, 2, 2').

11. A bearing arrangement according to any one of claims 1 to 10, **characterized in that** the first and/or second bearing element (6, 8) is mounted rotatably on the shaft (4) via a sliding bearing (24).

12. A bearing arrangement according to any one of claims 1 to 11, **characterized in that** the first and/or second bearing element (6, 8) is hydraulically damping.

13. A bearing arrangement according to any one of claims 1 to 12, **characterized in that** the first and/or second support element (9, 10) is of rigid design.

14. A bearing arrangement according to any one of claims 1 to 13, **characterized in that** the first and/or second support element (9, 10) has two legs (12, 13), via which the support element (9, 10) is mounted on the shaft (4).

## Revendications

1. Agencement ou support d'une première partie d'un véhicule, conçue en particulier en tant que cabine du conducteur (1) d'un camion sur une deuxième partie d'un véhicule conçue en particulier en tant que châssis-support de véhicule (2, 2'), la première partie du véhicule pouvant être déplacée depuis une première position, par rapport à la deuxième partie du véhicule, dans une deuxième position, et un arbre (4) étant prévu, autour duquel la première partie du véhicule (1) peut être pivotée, par rapport à la deuxième partie du véhicule (2, 2'), pour être amenée dans la deuxième position, **caractérisé en ce que**, au niveau de l'arbre (4), un premier élément de support souple ou résilient (6) est prévu dans une première section de l'arbre (5), et un deuxième élément de support souple ou résilient (8) est prévu dans une deuxième section de l'arbre (7), **en ce que** la première partie du véhicule (1) est appuyée sur l'arbre (4) dans la première section de l'arbre (5) par l'intermédiaire d'un premier élément d'appui (9) et dans la deuxième section de l'arbre (7) par l'intermédiaire du deuxième élément de support souple (8), et **en ce que** l'arbre (4) est appuyé sur la deuxième partie de véhicule (2, 2') dans sa première section d'arbre (5) par l'intermédiaire du premier élément de support souple (6) et dans sa deuxième section d'arbre (7) par l'intermédiaire d'un deuxième élément d'appui (10).

2. Agencement selon la revendication 1, **caractérisé en ce qu'**un ressort de torsion est prévu, qui produit une force de torsion agissant entre les première et deuxième parties de véhicule (1, 2, 2'), laquelle assiste le mouvement de la première partie de véhicule (1) depuis la première position dans la deuxième position.

3. Agencement selon la revendication 2, **caractérisé en ce que** l'arbre est conçu en tant que ressort de torsion.

4. Agencement selon la revendication 3, **caractérisé en ce que** l'arbre (4) est conçu comme un ressort à torsion, tout particulièrement comme une barre de torsion droite.

5. Agencement selon la revendication 3 ou 4, **caractérisé en ce qu'**une première extrémité (14) de l'arbre (4) est reliée de manière à résister à la torsion ou avec blocage en rotation au premier élément d'appui (9) et **en ce qu'**une deuxième extrémité (15) de l'arbre (4) est reliée de manière à résister à la torsion ou avec blocage en rotation au deuxième élément d'appui (10).

6. Agencement selon la revendication 5, **caractérisé en ce que** la liaison résistant à la torsion est effectuée par une coopération géométrique ou par conjugaison de formes.

7. Agencement selon la revendication 6, **caractérisé en que** la première et/ou la deuxième extrémité (14, 15) de l'arbre (4) est conçue comme un arbre cannelé.

8. Agencement selon l'une des revendications 5 à 7, **caractérisé en ce que**, au niveau de la première et/ou de la deuxième extrémité (14, 15) de l'arbre (4), un dispositif de réglage (19) tordant l'arbre (4) par rapport à la première et/ou la deuxième partie du véhicule (1, 2, 2') est prévu afin de régler la force de torsion.

9. Agencement selon l'une des revendications 1 à 8, **caractérisé en ce que** l'arbre s'étend à travers le premier et/ou le deuxième élément de support (6, 8).

10. Agencement selon l'une des revendications 1 à 9, **caractérisé en ce que** le premier et/ou le deuxième élément de support (6, 8) sont des supports à douilles ou paliers-douilles, lesquels présentent une partie d'ancrage interne (21) et une partie d'ancrage externe (23) reliée par l'intermédiaire d'un corps à ressort (22) à la partie d'ancrage interne (21), et la partie d'ancrage interne (21) étant appuyée sur l'arbre (4) et la partie d'ancrage externe (23) étant appuyée sur la première et/ou deuxième partie du véhicule (1, 2, 2').

11. Agencement selon l'une des revendications 1 à 10, **caractérisé en ce que** le premier et/ou le deuxième élément de support (6, 8) sont fixés de manière rotative sur l'arbre (4) par l'intermédiaire d'un palier à glissement (24).

12. Agencement selon l'une des revendications 1 à 11, **caractérisé en ce que** le premier et/ou le deuxième élément de support (6, 8) sont des amortisseurs hydrauliques.

13. Agencement selon l'une des revendications 1 à 12, **caractérisé en ce que** le premier et/ou le deuxième élément d'appui (9, 10) sont conçus de manière à être rigides.

14. Agencement selon l'une des revendications 1 à 13, **caractérisé en ce que** le premier et/ou le deuxième élément d'appui (9, 10) présentent deux montants (12, 13), par l'intermédiaire desquels l'élément d'appui (9, 10) est fixé sur l'arbre (4).
